(19) Europäisches Patentamt
European Patent Office
Office européen des brevets

(11) Publication number: 0 239 028 B1

# (12) EUROPEAN PATENT SPECIFICATION

(45) Date of publication of patent specification: 25.09.91 (51) Int. Cl.$^5$: G11B 5/72

(21) Application number: 87104123.2

(22) Date of filing: 20.03.87

## (54) Magnetic recording medium.

(30) Priority: 20.03.86 JP 62214/86
14.10.86 JP 243437/86
14.10.86 JP 243438/86

(43) Date of publication of application:
30.09.87 Bulletin 87/40

(45) Publication of the grant of the patent:
25.09.91 Bulletin 91/39

(84) Designated Contracting States:
DE FR GB

(56) References cited:
DE-A- 3 000 583
DE-A- 3 538 836

PATENT ABSTRACTS OF JAPAN, vol. 7, no. 146 (P-206) 25th June 83; & JP - A - 58 057 632 (NIPPON DENKI K.K.) 05-04-1983

PATENT ABSTRACTS OF JAPAN, vol. 9, no. 83 (P-348)[1806], 12th April 1985; & JP - A - 59 213 030 (DENKI KAGAKU KOGYO K.K.) 01-12-1984

PATENT ABSTRACTS OF JAPAN, vol. 10, no. 215 (P-481), 26th July 1986; & JP - A - 61 054 036 (NEC CORP.) 18-03-1986 (Cat. A)

(73) Proprietor: MATSUSHITA ELECTRIC INDUSTRIAL CO., LTD.
1006, Oaza Kadoma
Kadoma-shi, Osaka-fu, 571(JP)

(72) Inventor: Kurokawa, Hideo
38-17,Matsuzuka
Katano City, 576(JP)
Inventor: Mitani, Tsutomu
28-518,Tanimachi-Faibu,26-1 Konakawa-cho
Higashi-ku Osaka City 540(JP)
Inventor: Odagiri, Masaru
2-46, Seiwadai-nishi 2-chome
Kawanishi City, 666-01(JP)
Inventor: Yonezawa, Taketoshi
i-605, 7, Tenno 2-chome
Ibaraki City, 567(JP)

(74) Representative: Dr. Elisabeth Jung Dr. Jürgen Schirdewahn Dipl.-Ing. Claus Gernhardt
P.O. Box 40 14 68 Clemensstrasse 30
W-8000 München 40(DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services

## Description

### FIELD OF THE INVENTION AND RELATED ART STATEMENT

### 1. FIELD OF THE INVENTION

The present invention relates generally to a recording medium, and particularly pertains to a magnetic recording medium which has a thin film of a ferromagnetic metal as recording film by which signals such as of video, audio and data are recorded in high density.

### 2. DESCRIPTION OF THE RELATED ART

Recently, a recording medium using ferromagnetic metals such as Co, Ni, Cr and Fe is drawing attention as a recording medium for realizing high density magnetic recording, and various investigations have been made in order to put it to practical use.

In the magnetic recording technique, when a spacing is effected between a recording film and a magnetic head as an electromagnetic convertor, a spacing loss is caused thereby. Particularly, in a range of high recording frequency, such as a high density recording, the spacing loss is remarkable. Therefore, the above-mentioned spacing should be made as small as possible. In recording or reproducing of signals of video and audio, the magnetic head is usually made to contact with the recording medium. Even in recording of data signal, when demand for reliability for recording is not severe, for instance, in case of a floppy disk, the recording medium can be made to contact with the magnetic head. When the demand for reliability for recording is high, then the magnetic head is made to float apart from the surface of the recording medium under non-contact conditions in order to avoid any undesirable friction between the magnetic head and the recording medium. However, even in such a high reliability multiple magnetic recording system wherein the head runs floating on the recording medium, such systems are often constructed in a manner that the magnetic head still contacts with the recording medium at the moment of starting or stopping of the recording or reproducing. Furthermore, since the flotation of the magnetic head above the head face causes the spacing loss, those systems are unsuitable for a high density recording. From the above viewpoint, considering the adaptation for high density recording, it is more desirable that the recording medium contacts with the magnetic head, thereby to realize and retain the reliability for recording and reproducing. The above considerations demonstrate that the magnetic recording system has a problem that is fundamentally different from an optical recording system, because in the magnetic recording system, the magnetic head generally contacts with the recording medium.

The aforementioned magnetic recording medium provided with a thin film made of a ferromagnetic metal such as Co, Ni and Fe as recording film has a large coercive force. Therefore, it is suitable for high density recording, for instance, vertical recording.

However, when a protective film is not formed on the surface of the recording film, the recording film suffers damages such as exfoliation. And therefore, the formation of effective protective film on the recording film is advantageous in order to protect the recording film from the damages by contacting it with the magnetic head.

In a conventional magnetic recording medium wherein a magnetic powder mixed with a binder is applied on the base film as substrate, in order to avoid problems caused by contact of the magnetic head and the magnetic recording medium, a substance has been added to the binder, thereby to give wear resistance and smoothness to the contact surface of the magnetic recording medium. However, in the magnetic recording medium comprising the ferromagnetic metal thin film as recording film, when such improvements are intended in respect of wear resistance, smoothness and running durability of the magnetic recording medium per se by, for instance oxidising the surface of the recording film, deterioration of the magnetic property of the recording film can not be avoided. Therefore, it is necessary to retain the characteristics of the recording film such as wear resistance, by forming a protective film on the surface of the recording film. Furthermore, since such a protective film creates a spacing between the magnetic head and the recording film, the thickness of such protective film should be as small as possible.

Hitherto, protective films have been developed wherein organic matter is applied or vapor deposited as lubricant material on the surface of the ferromagnetic metal.

Since the wear resistance of such organic matter is inferior, they could not be used for a long time. Therefore, trials have been made in forming films of amorphous carbon or graphite on the surface of the ferromagnetic metal film by vacuum vapor deposition, sputtering or the like. The smoothness has been improved to a certain extent by this measure but satisfactory wear resistance has not been obtained.

In case that the above-mentioned materials are used as the protective film for the magnetic recording medium wherein the ferromagnetic metal thin film is used as the recording film, the thickness of the protective film must be made large, since the wear resistance thereof is not satisfactory. As a result, the spacing between the magnetic head and the magnetic recording medium becomes also large, thereby generating a large spacing loss. Furthermore, since the above-mentioned protective film is worn due to the contact with the magnetic head, a fine powder of the protective layer material is produced, and the powder sticks to the magnetic head, thereby remarkably lowering the quality and level of the output due to clogging up and dropout.

Because of the above-mentioned problems, the practical use of the high density magnetic recording medium comprising the ferromagnetic metal thin film as recording film has been hitherto much restricted. Therefore a satisfactory high density recording can not be attained so long as the above-mentioned problems are not settled.

In order to solve the above-mentioned problem, the following properties are required for the protective film:

(1) Smoothness and wear resistance must be excellent.

(2) Adhesiveness to the ferromagnetic metal must be excellent.

Moreover, it is required to satisfy the following conditions for forming the protective film:

(1) Even when the thickness of the protective film is small, a homogeneous film must he formed.

(2) Deposition rate must be large and the possibility of mass-production must be excellent.

(3) Deposition temperature must not be so high that the substrate such as a polyethylene base film (in case of a tape-shaped magnetic recording medium) is damaged.

Diamond seems to be suitable as material for the protective film satisfying the above-mentioned requirement. The diamond is a crystal having the highest hardness in all substances, it is chemically extremely stable and is considered to be excellent as regards wear resistance and durability in various conditions of usage. Concerning methods for forming a thin film of diamond, many reports have been made, and they are disclosed in the reference literatures as follows:

(1) OYOKIKAIKOGAKU (Applied Mechanical Engineering), July/1984, "DAIAMONDO HAKUMAKU NO TEIATSUGOSEI NO KENKYU" (Investigation of low pressure synthesis of diamond thin layer)

(2) GENDAIKAGAKU ( Modern Chemistry), September/1984, "DAIAMONDO NO TEIATSUGOSEI" (Low pressure synthesis of diamond)

(3) NIHON SANGYOGIJUTSU SINKOKYOKAI (Japan Industrial Technology Promotion Association) GIJUTSU SHIRYO (Technical data) No. 138, June/1984, "DAIAMONDO NO TEIATSUGOSEI" (Low pressure synthesis of diamond)

However, all those techniques are in an academic researching stage, and have not been put into practice. Furthermore, it is very difficult to use them as a means for producing a diamond protective film for the magnetic recording medium which needs the effectiveness in mass-production, because the above-mentioned methods need heating of the base material at high temperatures(above 400 °C), and the deposition velocity of film is rather low (maximum 20 to 30 nm/min (200 to 300 Å /minute)).

## OBJECT AND SUMMARY OF THE INVENTION

The present invention is intended to solve the above-mentioned problems, and the purpose of the present invnetion therefore is to obtain a magnetic recording medium provided with a protective film with excellent wear resistance and durability in various surroundings on a recording film made of a ferromagnetic metal.

The magnetic recording medium of the present invention comprises:

a substrate of non-magnetic material,

a recording film made of ferromagnetic material and formed on the substrate, and

a protective film which is provided on the recording film, which protective film comprises a) an amorphous diamond-like film made of amorphous carbon having diamond bonding or both diamond bonding and graphite bonding, and b) an organic compound film formed on the amorphous carbon film and made of an organic compound selected from the following groups:

A) organic compounds having at least one fatty alkyl group with at least 8 carbon atoms and at least one carboxyl group or mercapto group at the end of said molecular structure;

B) organic compounds having at least one fatty alkyl group with at least 8 carbon atoms and at least one fluoroalkyl group having at least 3 carbon atoms at the end of said molecular structure;

C) organic compounds having at least one fatty alkyl group with at least 8 carbon atoms, at least one fluoroalkyl group having at least 3 carbon atoms and at least one carboxyl group at the end of said

molecular structure;

D) organic compounds having at least one fatty alkyl group with at least 8 carbon atoms, at least one fluoroalkyl group having at least 3 carbon atoms and at least one mercapto group at the end of said molecular structure;

with the proviso that said ferromagnetic recording film and said amorphous carbon film have both a specific resistance of less than $10^{13}$ Ω.cm.

It is essential that the component a) of the protective film has an amorphous structure which is, however, diamond-like in that it has a diamond bonding.

From JP-A-58057632 it was known to provide a lubricant layer either directly on the surface of a continuous thin film of magnetic iron oxide formed on a flexible substrate or on an intermediate protecting film of a silicate polymer. This known magnetic recording medium, however, does not comprise an amorphous diamond-like carbon film. Furthermore the specific groups A) to D) defined above for suitable organic compounds for the component b) of the proecting film according to the present invention are not disclosed.

JA-A-59213030 envisages depositing a thin film consisting of a crystalline body having a diamond structure as the main component and an amorphous body as the remaining part by the ionizing-vapor deposition technique on a magnetic thin film medium. This magnetic thin film is first coated by a substance whose sputtering rate is comparatively low, like Si, Ti, Ta and W. By this measure the magnetic recording film material itself shall he prevented from sputtering when the carbon film is applied. The carbon film of this prior art, however, is different from that of the present invention in comprising as main constituent fine crystalline diamond.

From JP-A-61054036 it can be learned that a protective layer may he applied on a magnetic recording medium by plasma vapor deposition which layer has a mixed phase consisting of diamond-like carbon and amorphous carbon. Nothing is said about the recording medium itself, however, and furthermore the essential protective element b) of the present invention is missing.

DE-OS 3 000 583 discloses the suitibility of a fluorinated telechelic polyetherpolymer as lubricant for a magnetic recording medium for audio purposes, which is effective at high temperatures (up to 40 °C) and high relative humidity of about 80%.

## BRIEF DESCRIPTION OF THE DRAWINGS

FIG.1 is a sectional view of a magnetic recording medium showing a fundamental concept of the first embodiment of the present invention.

FIG.2 is a sectional view showing a magnetic recording medium of the second embodiment of the present invention.

FIG.3 is a sectional view showing a magnetic recording medium in the middle of the preparation process thereof.

FIG.4 is a sectional view showing a magnetic recording medium of the third embodiment of the present invention.

FIG.5 is a sectional view showing a magnetic recording medium of the third embodiment of the present invention.

FIG.6 and FIG.7 are characteristic diagrams showing results of electron spectroscopy for chemical analysis (hereinafter referred to as ESCA) of the surface of a magnetic recording medium before and after formation of the diamond like carbon film.

## DESCRIPTION OF THE PREFERRED EMBODIMENT

Before explaining any embodiment of the present invention, a method for forming a high hardness carbon film used as protective film according to the present invention having been developed by the inventors is described below.

A hydrocarbon gas as raw material gas for the carbon film is transformed into a plasma at a pressure of 10--100 Pa, and the plasma is blown onto the substrate as accelerating at least ions in the plasma. Thereby, it becomes possible to form the high hardness carbon film having a Vickers hardness above 2000 N/mm$^2$ (200 kg/mm$^2$) at a high deposition rate of about 500 nm/min (5000 Å/min) under normal temperature conditionsm without heating the substrate. The above-mentioned method is called plasma-injection chemical vapor deposition method (hereinafter referred to as PI-CVD method).

A carbon film prepared by the PI-CVD method was analyzed and characteristics thereof were observed. The possible crystallization structure was observed by an electron diffraction and a transmission electron

microscope. The composition was analyzed by a secondary ion mass spectrometer, and the structure was elucidated by a Raman spetroscopy analysis and an energy loss spectrum analysis. As a result, it was proved that the carbon film is an amorphous i.e. diamond like carbon film (so-called i-carbon film) wherein a graphite bonding ($SP^2$ electron configuration) and a slight amount of hydrogen are contained as a mixture in a diamond bonding ($SP^3$ electron configuration).

A diamond-like carbon film made by the PI-CVD method shows a Vickers hardness above 20000 $N/mm^2$ (2000 $kg/mm^2$) and is excellent in wear resistance. Furthermore it shows a high thermal conductivity almost equal to about

$$\frac{2.51208\ J}{10^{-2}\cdot m.sec.°C}$$

(0.6 cal/cm.sec.°C) and is excellent in radiation of frictional heat.

In such formation of the diamond-like carbon film by the PI-CVD method, there are two requirements for the substrate on which the film is deposited. The first requirement is that the specific resistance is less than $10^{13}$Ω.cm. A material having a specific resistance of above $10^{13}$Ω.cm generally shows the characteristics of an insulation material, and therefore, if a film is formed by sputtering plasma containing ions onto the substrate by the PI-CVD method, the surface of the film is charged with electricity and repels the ions, thereby preventing a formation of a strong film.

On the other hand, when a neutralization means such as irridation of electron beam is used, it is possible to form a strong layer, but the materials having a specific resistance of above $10^{13}$Ω.cm are not preferred, since the construction of an apparatus becomes complicated.

Another requirement is that the material has a high chemical affinity in respect of carbon and a high bonding strength between atoms in the carbide formed by the PI-CVD method.

Materials which satisfy the above mentioned two requirements are metals such as Al, Be, Co, Cr, Fe, Mn, Ni, Zn, Hf, V, Nb, Ta, Mo, W, alloys containing the above-mentioned metals as main component and semiconductors made from Si, Ge, B or SiC. Particularly, Si, B, Cr firmly combine with carbon in covalent bond or the like. The diamond-like carbon film formed on the ferromagnetic recording film has itself a specific resistance of about $10^7$ to $10^{13}$Ω.cm and therefore satisfies the above-mentioned first requirement.

The ferromagnetic metals such as Co, Ni and Fe also satisfy the above-mentioned two requirements, and therefore it is possible to form a diamond-like carbon film firmly adhering to the surface of the recording film, and it is even more effective if the surface of the recording film is cleaned before the formation of the diamond-like carbon film by a plasma of Ar, or $O_2$.

Moreover, for instance, in case of a tape-shaped magnetic recording medium, effective mass production is required, and furthermore when polyethylene or the like is used as the substrate, the temperature rise admissible during formation of the protective film is limited. Therefore, the formation of the diamond-like carbon film according to the invention onto such a recording medium is realized for the first time by the PI-CVD method.

As mentioned above, by means of the PI-CVD method, it becomes possible to obtain the recording medium provided with the protective film made of the diamond-like carbon on the surface of the recording film of the ferromagnetic metal, and the resultant recording film is excellent in durability and wear resistance. However, even the recording medium provided with the diamond-like carbon film as the protective film causes a clogging up of the magnetic head with ensuing deterioration of the output due to dust in the air, furthermore exfoliation of the recording medium at the end thereof and transcription of stain from the back face of the recording medium to the surface thereof occurs. Moreover, the coefficient of friction of the diamond-like carbon film becomes higher under the conditions of high temperature and high humidity. In order to improve the above-mentioned disadvantage, it is envisaged according to the invention to form an organic compound film having excellent lubrication ability, for instance an organic compound film containing fluorine, on the surface of the protective film consisting of the diamond-like carbon. The organic compound may be formed directly on the diamond-like carbon film or may be formed indirectly thereon by means of transcription. Besides the conventional wet-coating method, a dry-process such as the sputtering method, or the vapor deposition method can be used for forming the organic compound film.

As mentioned above, by means of the PI-CVD method, it becomes possible to form the diamond-like carbon film onto the surface of the recording film made of ferromagnetic metal such as Co, Ni and Fe at a high depositon rate. Particularly, in case of a Co/Cr alloy recording film, a strong film is formed, since rather large amounts of Cr are mal-distributed at the surface thereof.

The diamond-like carbon film has an amorphous structure, but its characteristics resemble diamond.

Therefore it is very suitable for protecting the recording film. Moreover, as a result of being amorphous, the diamond-like carbon film is flexible to a certain extent, and therefore it is also suitable for protecting the recording film formed on a flexible substrate such as a polyethylene film.

When the thickness of the diamond-like carbon film is above 50 nm (500 Å), then the bending stiffness becomes high, and as a result, the contact between the diamond-like carbon film and the magnetic head is unstable and furthermore, in case of a flexible recording medium, undesirable cracks are caused by figure variation thereof. Moreover, when the thickness is less than about 2 to 3 nm (20 to 30 Å) the diamond-like carbon film becomes not uniform but forms an island structure, thereby extremely lowering the still durability and corrosion resistance. Therefore, when the diamond-like carbon layer is formed by the PI-CVD method, it is preferable that the thickness thereof is 3 to 50 nm (30 to 500 Å). Moreover, in case of a tape shaped magnetic recording medium, when contact stability with the magnetic head and reliability are taken into account, it is desirable that the thickness is 5 to 30 nm (50 to 300 Å). Additionally, if the recording medium shall be adapted for high density recording, for instance as a vertical recording medium or ME tape for 8mm video tape recorders, in order to decrease the spacing loss (e.g. the spacing loss is about 6 dB at 0.5 $\mu$m recording frequency, 30 nm (300 Å) thickness), and if the advantages of the feature of the diamond-like carbon film shall be made use of, a thickness of about 5 to 15 nm (50 to 150 Å) is desirable.

The organic compound film having a superior slidability is formed on the diamond-like carbon film. The organic compound film has a large contact angle, and dusts in the surrounding air and transcribed stains or the like hardly stick thereon. Therefore, the clogging up and dropping out due to the dusts and stains are remarkably decreased by forming the organic compound film on the diamond-like carbon film. Moreover, it is also possible to decrase the coefficient of friction under a particular condition (e.g. at 40 °C Temperature and 90% relative humidity) by selecting a desirable composition of the organic compound, thereby improving the running stability and decreasing the wear of the magnetic head.

## EXAMPLES

An embodiment of the present invention is shown in FIG. 1. A substrate 1 is made of a non-magnetic material such as plastic, glass and metal, and has a tape-shaped figure, card-shaped figure, disk-shaped figure or the like. A recording film 2 made of a ferromagnetic metal such as Co, Cr, Ni and Fe is formed on the substrate 1 by a vapor deposition method, a sputtering method or the like and the thickness thereof is about 100 to 300 nm (1000 to 3000 Å). For instance, in case of a Co-Cr alloy vertical magnetic recording medium wherein 10 to 30% of Cr is added to Co as main component, a columnar crystal structure which is rich in Co is formed, and Cr segregates out at a border part between each columnar crystal. Therefore, the top surface of the recording film 2 is abound in Cr.

A diamond-like carbon film 3 made is formed on the recording film 2 by the PI-CVD method. As the surface of the vertical recording medium using a Co-Cr alloy film as the recording film is abound in Cr, the diamond-like carbon film strongly adheres to the surface thereof. The thickness of the diamond-like carbon film is less than 100 nm (1000 Å), preferably less than 30 nm (300 Å) and it can be determined depending on the reliability required or the type of magnetic recording apparatus in which the recording medium shall be used.

An organic compound film 4 is formed on the recording film 2. The organic compound film has the following advantages: dusts in the surrounding air and transcribed stains hardly stick thereon, and furthermore the coefficient of friction decreases under the particular conditions. There are the following four groups of the organic compound films showing the above-mentioned effects.

### Group A

A film made of an organic compound comprising at least one fatty alkyl group having at least 8 carbon atoms and at least one carboxyl of carboxyl group and mercapto group at the end of molecular structure.

<Examples>

① $C_{17}H_{35}COOH$,

② $CH_3(CH_2)_7CH{=}CH(CH_2)_7COOH$,

③ $CH_2OCOC_8H_{17}$
|
$CHOCOC_8H_{17}$
|
$CH_2COOH$

④ $C_{18}H_{37}SH$

⑤ $CH_2OCOC_8H_{17}$
|
$CHOCOC_8H_{17}$
|
$CH_2SH$

Group B

A film made of an organic compound comprising at least one fluoroalkyl group having at least 3 carbon atoms and at least one fatty alkyl group having at least 8 carbon atoms at the end of molecular structure.

<Examples>

① $CH_2OCOC_5F_{11}$
|
$CHOCOC_{12}H_{25}$
|
$CH_2OCOC_{12}H_{25}$

②

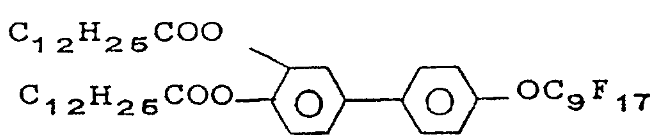

③ $C_{18}H_{37}COOC_8F_{17}$

④ $C_{18}H_{37}CH_2-S-CH_2CH_2C_8F_{17}$

⑤ 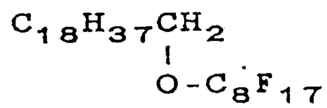

⑥ 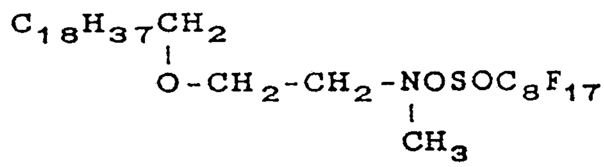

⑦ 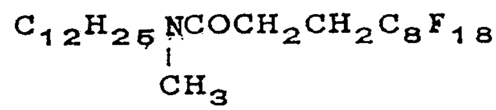

⑧ 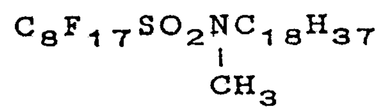

⑨ $CH_3(CH_2)_7CH=CH(CH_2)_7COO(CF_2)_9H$

⑩ 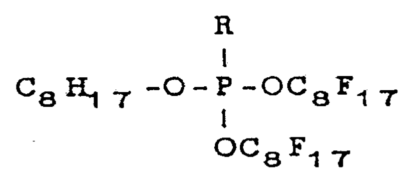

Group C

A film made of an organic compound comprising at least one fluoroalkyl group having at least 3 carbon atoms and at least one fatty alkyl group having at least 8 carbon atoms and at least one carboxyl group at the end of molecular structure.

<Examples>

①
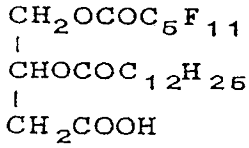

②
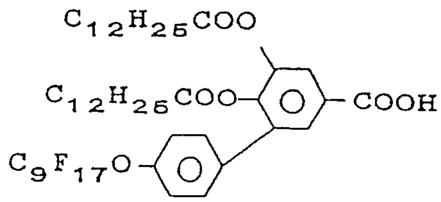

③
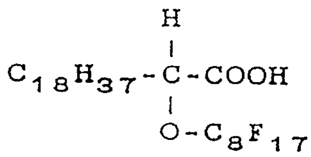

④
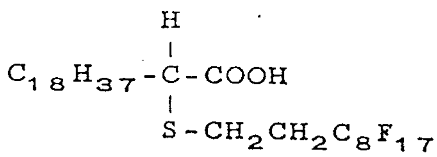

⑤
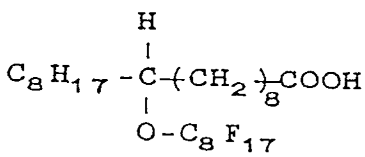

⑥
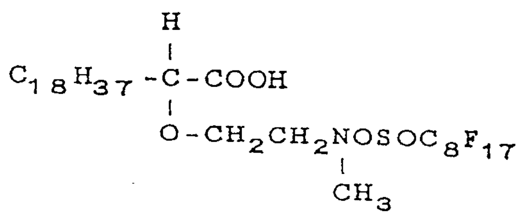

⑦
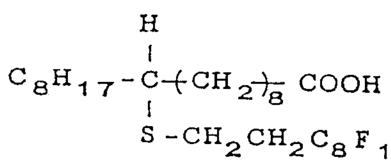

⑧
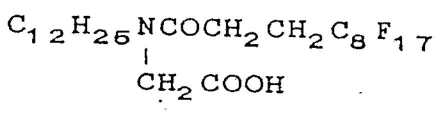

⑨ $C_8F_{17}SO_2NC_{18}H_{37}$
$\qquad\qquad\quad |$
$\qquad\quad CH_2COOH$

⑩ $CH_3(CH_2)_7CH{=}CH{-}CH_2CH_2{-}COO(CF_2)_9H$
$\qquad\qquad\qquad\qquad\quad |$
$\qquad\qquad\qquad\qquad COOH$

Group D

A film made of an organic compound comprising at least one fluoroalkyl group having at least 3 carbon atoms and at least one fatty alkyl group having at least 8 carbon atoms and at least one of mercapto group at the end of molecular structure.

<Examples>

① $CH_2OCOC_8F_{17}$
$|$
$CHOCOCH_2SH$
$|$
$CH_2OCOC_{12}H_{25}$

②

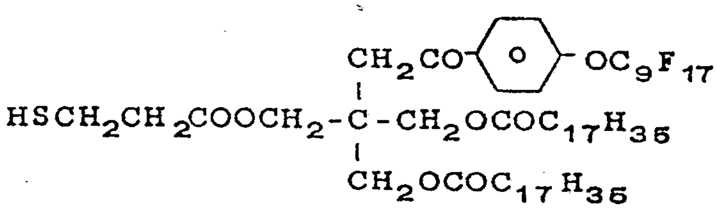

③ $C_{12}H_{23}CHCOOCH_2CH_2C_8F_{17}$
$\qquad\quad |$
$\qquad\quad SH$

④ $SH$
$|$
$CHCOOC_{18}H_{37}$
$|$
$CH_2COOCH_2CH_2C_8H_{37}$

⑤

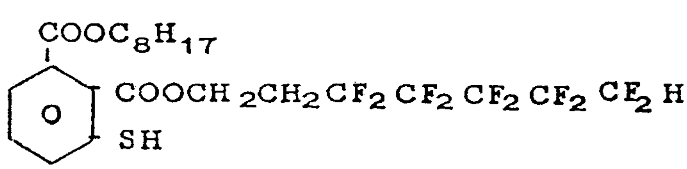

⑥ 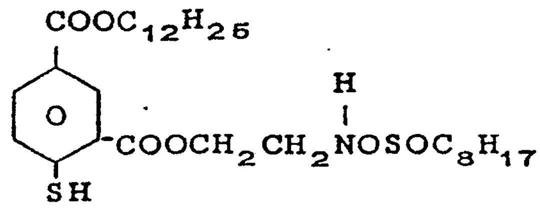

The above-mentioned organic compound film is formed by applying the organic compound dissolved in a solvent, such as toluene, n-hexane and isopropylalcohol, on the recording film followed by drying it, or by vacuum deposition (organic compound vacuum deposition).

Characteristics for practical use, such as still durability, corrosion resistance, coefficient of friction under particular conditions the wear amount of the magnetic head, were measured for an ME tape. The results are shown in Table 1 together with comparison data.

Table 1

| Protective film \ Item | Still durability (minute) | Corrosion resistance (day) | Coefficient of friction | Wear amount of head (μm) |
|---|---|---|---|---|
| Not provided | 3 | 1 | 0.45 | 60 |
| Organic compound film (A, B, C, D) | 5—10 | 3—7 | 0.21—0.35 | 5—7 |
| Amorphous diamond like carbon film | 50 | 4 | 0.38 | 50 |
| Diamond like carbon film and organic compound film A | 100—200 | 14—21 | 0.22—0.25 | 5—7 |
| Diamond like carbon film and organic compound film B | 300—600 | 35—49 | 0.23—0.28 | 2—3 |
| Diamond like carbon film and organic compound film C | 1000—2000 | 56—70 | 0.18—0.21 | 1—2 |
| Diamond like carbon film and organic compound film D | 800—1500 | 35—49 | 0.17—0.19 | 0.5—1 |

Testing conditions:

(1) Organic compound amount applied: 10 $mg/m^2$

(2) Still durability: showing a period till an output decreases by 3 dB.

(3) Corrosion resistance: showing a period till a spot corrosion generates.

(4) Coefficient of friction: measured under conditions of 40°C; 80% RH; 180° winding angle to SUS 420 J2; running speed 1 cm/sec.

(5) Wear amount of head: showing a wear amount of ferrite head measured under conditions of 23°C; 70% RH; tape running speed after 300 Hr of tape running time.

As shown in Table 1, in case of a protective film consisting only of an organic compound film, although the coefficient of friction is small, the still durability and the corrosion resistance cannot be improved.

In case of a protective film consisting only of an amorphous diamond-like carbon film, the still durability is improved, thereby protecting effectively the recording film 2. But, the coefficient of friction under the particular conditions is high, and the problem of wear of the magnetic head is not improved. Moreover, the

moisture-proof effect is not satisfactory, since the diamond-like carbon film has an amorphous structure, and the corrosion resistance is not better than that of the organic compound film.

On the other hand, if the organic compound film 4 is formed on the diamond-like carbon film 3, the still durability and the corrosion resistance are remarkably improved in comparison with the case that each film is used independently. Furthermore, to the same extent as the coefficient of friction under the particular conditions decreases, the wear amount of the head also decreases, thereby making it possible to obtain a magnetic recording medium which is excellent in total performance.

For the organic compound film, groups C and D are superior. The organic compounds comprising the fluoroalkyl group having at least 3 carbon atoms are very superior in the still durability, corrosion resistance, and in decreasing the wear amount of the head.
It is considered that those characteristics derive from the improved adhesion ability and the enlarged contact angle. The synergetic effect of a combination of the organic compound film and the diamond-like carbon film is thereby remarkably increased. Moreover, organic compounds having the carboxyl group or mercapto group are more excellent in slidability and still durability under the particular conditions.

With the organic compounds not containing the fatty alkyl group having at least 8 carbon atoms, the above-mentioned synergetic effect cannot be obtained. It is considered that the affinity to the diamond-like carbon film is not satisfactory.

The fatty alkyl group and the fluoroalkyl group may be not only straight-chain type but also isomers thereof having a branched structure may be useful.

In general, the organic compound film 4 is directly formed on the diamond-like carbon film 3. However, in case of a tape-shaped recording medium, the organic compound film 4 may be indirectly formed on the surface of the diamond-like carbon film 3 in that the organic compound film 4 is applied as a back coating film 5 on an opposite side of the substrate 1, or by applying the above-mentioned organic compound directly on the opposite side of the substrate 1, or by transferring the same onto the surface of the diamond-like carbon film 3, when those recording media are wound on a reel or the like, thereby forming the organic compound film 4.

Preferably, the amount of the organic compound used for the coating is 0.1 to 500 $mg/m^2$ , and preferred is 0.2 to 200 $mg/m^2$ .

Another embodiment of the present invention is shown in Fig.2. A recording film 7 of a ferromagnetic alloy, for instance Co-Ni alloy, formed by the sputtering method or the vacuum deposition method has a columnar crystal structure. Since the columnar crystal particles 8 in this structure combine ferromagnetically with each other, the magnetic domain is large and therefore, the magnetic noise is larger than in the conventional coating type recoding medium. In order to decrease the magnetic noise, it is essential that the columnar crystals are made fine and are magnetically isolated. Therefore, in the present embodiment, the ferromagnetical bonding is prevented by providing a metal oxide layer 9 on the surface of the columnar crystals 8, thereby making the magnetic domain small.

The metal oxide layer 9 is generally formed on the columnar crystals 8 by carrying out the sputtering or the vapor deposition in an oxygen atmosphere. In this manner as shown in Fig.3, the metal oxide layer 14 is formed on all circumferences of the columnar crystals. As a result, the metal oxide layer 14 , provided on the surface of the recording film 7 brings about a spacing between the magnetic head and the columnar crystals, thereby causing a spacing loss. Therefore, the metal oxide layer 14 is removed by an Ar gas sputtering treatment or the like, and thereafter, the diamond-like carbon film 10 and the organic compound film 11 are formed. The metal oxide layer 14, however, is harder than the columnar crystals 13, and in many cases, it also shows an effect of increasing the mechanical strength. Therefore, when the metal oxide layer 14 is removed, the durability against a contact with the magnetic head deteriorates, and as a result, satisfactory performance characteristics cannot be obtained by the conventional organic compound protective film.

On the other hand, in this embodiment, a practical durability can be ontained by using both the diamond-like carbon film 10 and the organic compound film 11 as the combined protective film. Moreover, in order to more effectively decrease the magnetic noise by making the columnar crystals 8 fine, the columnar crystal structure may be made in form of a multilayered structure, as shown in FIG. 4.

The diamond-like carbon film may then be formed without removing the metal oxide layer on the surface of the recording film. However, in case that, for example, the diamond-like carbon film is formed by the PI-CVD method, the following problem occures: As mentioned above, in the PI-CVD method, a plasma of a hydrocarbon gas, such as methane gas, is used, and therefore the hydrocarbon has decomposes to produce an atomic state hydrogen. The atomic state hydrogen contributes to the formation of the diamond-like carbon film due to (1) a dehydrogen effect and (2) a graphite removing effect. However, since it is extremely active, it shows the effect that the surface of the metal oxide layer is chemically sputtered or

reduced. Hence, when the diamond-like carbon film is formed on the surface of the metal oxide layer provided on the ferromagnetic metal recording medium, the metal oxide is partly or entirely reduced by impact of the active atomic state hydrogen and ions. The atomic density of the metal oxide layer becomes small due to this reduction, and the mechanical strength thereof remarkably deteriorates. Therefore, the effect of improving the durability obtained by forming the diamond-like carbon film on the metal oxide film is considerably decreased. If the thickness of the diamond-like carbon film is more than about 20 nm (200 Å) the deterioration of the durability of the metal oxide film can be compensated by the stiffness of the diamond-like carbon film per se. However, as the thickness becomes small, it becomes difficult to compensate the durability deterioration of the metal oxide only by the stiffness of the diamond-like carbon film, and as a result, the durability of the magnetic recording medium as such decreases. In order to synthesize the diamond-like carbon film, the impact energy of the atomic state hydrogen and ion is generally used, and therefore the above-mentioned problems are induced even when any method other than the PI-CVD method is used.

In order to solve this problem, it is required to form the diamond-like carbon film while protecting the surface of the metal oxide layer from the reduction effect of the atomic state hydrogen and the impact of ions. Hence, as is shown in FIG.5, it is intended to form a shield film 19 on the surface of the recording film 18. With respect to the method of formation of the shield film 19, any method such as the sputtering method, the PI-CVD method and the coating method may be used as far as they form a uniform film without causing a pin hole, and do not change the characteristics of the recording film 18 as prepared. A material is preferable for the shield film 19 which is not influenced by the impact of the atomic state hydrogen and ions during the sputtering treatment used for synthesizing the diamond-like carbon film 20. Moreover, a material constituted by elements, such as carbon, hydrogen and fluorine, can be used which does not substantially deteriorate the characteristics of the diamond-like carbon film even when those elements are enclosed therein during the sputtering process.

A typical example is described hereinunder.

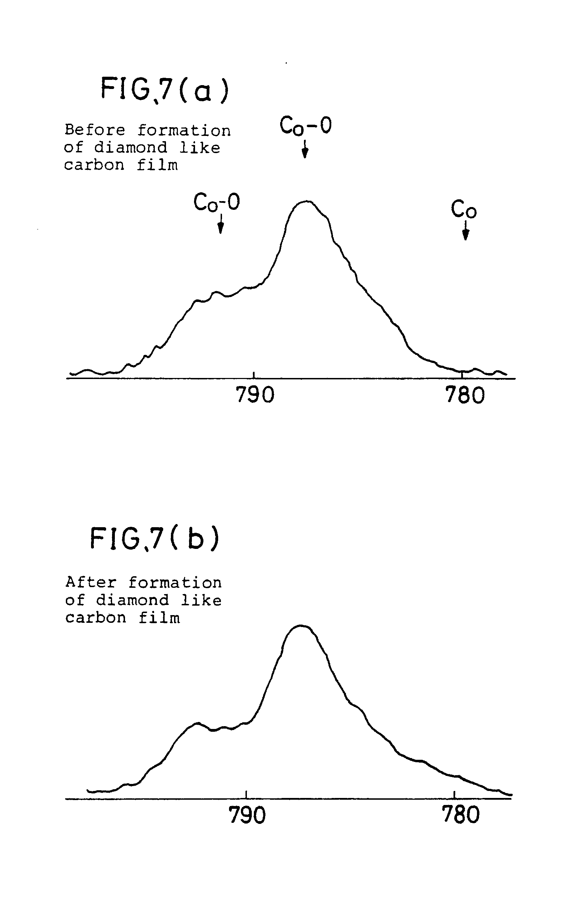

The Co-Ni-O magnetic recording film 18 is provided with the shield film 19 made of a fluorine containing organic compound and obtained by the PI-CVD method using octafluorocyclobutane ($CC_4F_8$) gas as a raw material gas. The organic compound is represented by the formula $C_xF_y$($y/x$ = 1.2 to 1.8), and the thickness of the organic compound film is at most 10 nm (100 Å). The diamond-like carbon film 20 is formed on the fluorine-containing organic compound film by the PI-CVD method. In case that the fluorine-containing organic compound film was not provided on the recording film 18, the Co-O metal oxide layer was decreased by the reduction effect and the impact energy of the ions as shown in FIG.6 which indicates a result of ESCA. On the other hand, when the shield film 19 made of the fluorine-containing organic compound was formed on the recording film 18, it was observed that nearly 90% of Co-O is retained after the formation of the diamond-like carbon film 20 as shown in FIG.7. The practical durability of the recording medium of the present invention is evaluated by a still durability test. The still test is a test for measuring the practical durability of a VTR in still mode, and is considered to be the most severe durability test, since the magnetic head rubs the same spot on the tape. Results are shown in Table 2.

Table 2

Result of Still Durability Test

(Tension: 20g, Head: amorphous head)

| Fluorine containing organic compound film nm | Diamond like carbon film nm | Ratio of Co-O/Co after formation of diamond like carbon film | Still durability (hour) |
|---|---|---|---|
| 0 | 20 | 0.05 or below | 20 or above |
| 0 | 15 | 0.05 or below | 3 |
| 0 | 10 | 0.05 or below | 1—2 |
| 1,5 | 10 | 0.37 | 18—20 |
| 4,5 | 10 | 0.40 | 18—20 |
| 1,5 | 6 | 0.38 | 6—8 |

As shown in Table 2, when the thickness of the diamond-like carbon film is 20 nm (200 Å) or above, satisfactory still durability is obtained even if the shield film is not provided. However, when the thickness of the diamond-like carbon film is small, it is impossible to compensate the deterioration of the durability of the recording film due to the reduction of the metal oxide layer. On the other hand, by forming the shield film 19 made of the fluorine containing organic compound on the recording film 18, the still durability is improved, and even when the thickness of the diamond-like carbon film 20 is about 6 nm (60 Å), higher still durability is obtained in comparison with the case of forming a diamond-like carbon film having a 15 nm (150 Å) thickness without providing the shield film 19.

The fluorine containing organic compound film shows a satisfactory shield effect even when the thickness thereof is less than 5 nm (50 Å). Therefore, the deterioration of the magnetic property due to the spacing loss or the like is considerably small. Moreover, when the organic compound film 21 is provided on the surface of the diamond-like carbon film 20, characteristics such as the durability are improved more by the synergetic effect of the diamond-like carbon film 20 and the organic compound film 21 then mentioned in the first embodiment.

As mentioned above, a magnetic recording medium excellent in total performance characteristics can be obtained by forming the protective film constituted of the diamond-like carbon film and the organic compound film on the ferromagnetic metal recording film.

The present invention is remarkably effective for realizing the high density recording using the magnetic recording medium wherein the ferromagnetic metal is used for the recording film.

## Claims

**1.** A magnetic recording medium comprising

a substrate made of non-magnetic material,

a recording film made of ferromagnetic metal and formed on said substrate, and

a protective film which is provided on the recording film, which protective film comprises a) an amorphous diamond-like carbon film made of amorphous carbon having diamond bonding or both diamond bonding and graphite bonding, and b) an organic compound film formed on said amorphous

carbon film and made of an organic compound selected from the following groups:

A) organic compounds having at least one fatty alkyl group with at least 8 carbon atoms and at least one carboxyl group or mercapto group at the end of said molecular structure;

B) organic compounds having at least one fatty alkyl group with at least 8 carbon atoms and at least one fluoroalkyl group having at least 3 carbon atoms at the end of said molecular structure;

C) organic compounds having at least one fatty alkyl group with at least 8 carbon atoms, at least one fluoroalkyl group having at least 3 carbon atoms and at least one carboxyl group at the end of said molecular structure;

D) organic compounds having at least one fatty alkyl group with at least 8 carbon atoms, at least one fluoroalkyl group having at least 3 carbon atoms and at least one mercapto group at the end of said molecular structure;

with the proviso that said ferromagnetic recording film and said amorphous carbon film have both a specific resistance of less than $10^{13}\Omega$.cm.

2. A magnetic recording medium in accordance with claim 1, wherein said protective film contains hydrogen.

3. A magnetic recording medium in accordance with claim 1, wherein said amorphous carbon film has a thickness in the range of 3 to 50 nm (30 to 500Å).

4. A magnetic recording medium in accordance with claim 1, wherein said organic compound film is formed by applying said organic compound in an amount of 0.1 to 500 mg/$m^2$.

5. A magnetic recording medium in accordance with claim 1, wherein said recording film is made of a ferromagnetic metal or alloy having a columnar crystal structure, and that a metal oxide layer is provided on a surface of said columnar crystal particles.

6. A magnetic recording medium in accordance with claim 5, wherein said columnar crystal structure comprises a multilayered structure of said columnar crystal particles.

7. A magnetic recording medium in accordance with claims 5 and 6, wherein said columnar crystal structure is comprising columnar crystal particles which are coated by or embedded in an oxide layer, and a shield film is provided between said recording film and said diamond-like carbon film

8. A magnetic recording medium in accordance with claim 7, wherein said shield film consists of a material comprising at least one member selected from the group of the elements carbon, hydrogen, oxygen, fluorine and combinations thereof.

9. A magnetic recording medium in accordance with claim 7, wherein said shield film has a thickness of 5 nm (50Å) or below.

## Revendications

1. Milieu d'enregistrement magnétique comprenant :
- un substrat en matériau amagnétique,
- une pellicule d'enregistrement en métal ferromagnétique et formée sur ledit substrat, et
- une pellicule de protection qui est prévue sur la pellicule d'enregistrement, pellicule de protection qui comprend a) une pellicule en carbone amorphe ressemblant à du diamant constituée de carbone amorphe ayant une liaison diamant ou une liaison diamant ainsi qu'une liaison graphite, et b) une pellicule en composé organique formée sur ladite pellicule en carbone amorphe et constituée d'un composé organique choisi dans les groupes suivants :

A) composés organiques ayant au moins un groupe alkyle gras avec au moins 8 atomes de carbone et au moins un groupe carboxyle ou un groupe mercapto à l'extrémité de la structure moléculaire;

B) groupes organiques ayant au moins un groupe alkyle gras avec au moins 8 atomes de

carbone et au moins un groupe fluoroalkyle ayant au moins 3 atomes de carbone à l'extrémité de la structure moléculaire;
C) composés organiques ayant au moins un groupe alkyle gras avec au moins 8 atomes de carbone, au moins un groupe fluoroalkyle ayant au moins 3 atomes de carbone et au moins un groupe carboxyle à l'extrémité de la structure moléculaire;
D) composés organiques ayant au moins un groupe alkyle gras avec au moins 8 atomes de carbone, au moins un groupe fluoroalkyle ayant au moins 3 atomes de carbone et au moins un groupe mercapto à l'extrémité de la structure moléculaire;

dans la mesure où ladite pellicule d'enregistrement ferromagnétique et ladite pellicule en carbone amorphe ont toutes deux une résistance spécifique inférieure à $10^{13}\Omega$.cm.

**2.** Milieu d'enregistrement magnétique selon la revendication 1, dans lequel :
- ladite pellicule de protection contient de l'hydrogène.

**3.** Milieu d'enregistrement magnétique selon la revendication 1, dans lequel :
- ladite pellicule en carbone amorphe a une épaisseur de l'ordre de 3 à 50 nm (30 à 500 Å).

**4.** Milieu d'enregistrement magnétique selon la revendication 1, dans lequel :
- ladite pellicule en composé organique est formée par application dudit composé organique suivant une quantité de 0,1 à 500 mg/m$^2$.

**5.** Milieu d'enregistrement magnétique selon la revendication 1, dans lequel :
- ladite pellicule d'enregistrement est constituée d'un métal ou d'un alliage ferromagnétique ayant une structure cristalline en colonne, et en ce qu'une couche d'oxyde métallique est prévue sur la surface desdites particules cristallines en colonne.

**6.** Milieu d'enregistrement magnétique selon la revendication 5, dans lequel :
- ladite structure cristalline en colonne comprend une structure multicouche desdites particules cristallines en colonne.

**7.** Milieu d'enregistrement magnétique selon la revendication 5 et 6, dans lequel :
- ladite structure cristalline en colonne est constituée de particules cristallines en colonne qui sont appliquées par revêtement ou encastrées dans une couche d'oxyde, et une pellicule écran est prévue entre ladite pellicule d'enregistrement et ladite pellicule en carbone ressemblant à du diamant.

**8.** Milieu d'enregistrement magnétique selon la revendication 7, dans lequel :
- ladite pellicule écran est constituée d'un matériau comprenant au moins un élément choisi dans le groupe des éléments carbone, hydrogène, oxygène, fluor et leurs combinaisons.

**9.** Milieu d'enregistrement magnétique selon la revendication 7, dans lequel :
- ladite pellicule écran a une épaisseur de 5 nm (50 Å) ou moins.

## Patentansprüche

**1.** Ein magnetisches Aufzeichnungsmedium, umfassend ein Substrat aus einem nicht-magnetischen Material, einen Aufzeichnungsfilm aus einem ferromagnetischen Metall, der auf dem genannten Substrat gebildet ist, und einen Schutzfilm, der auf dem Aufzeichnungsfilm vorgesehen ist, welcher Schutzfilm a) einen amorphen diamantartigen Kohlenstoffilm aus amorphem Kohlenstoff mit einer Diamantbindung oder sowohl einer Diamantbindung als auch einer Graphitbindung, und b) einen Film aus einer organischen Verbindung umfaßt, der auf dem genannten amorphen Kohlenstofffilm gebildet ist und aus einer organischen Verbindung besteht, die aus den folgenden Gruppen ausgewählt ist:
A) Organische Verbindungen, enthaltend mindestens eine für Fette typische(fatty) Alkylgruppe mit mindestens 8 Kohlenstoffatomen und mindestens eine Carboxylgruppe oder Mercaptogruppe am Ende der genannten Molekülstruktur;
B) organische Verbindungen enthaltend mindestens eine für Fette typische(fatty) Alkylgruppe mit mindestens 8 Kohlenstoffatomen und mindestens eine Fluoralkylgruppe mit mindestens 3 Kohlenstoffatomen am Ende der genannten Molekülstruktur;

C) organische Verbindungen enthaltend mindestens eine für Fette typische(fatty) Alkylgruppe mit mindestens 8 Kohlenstoffatomen, mindestens eine Fluoralkylgruppe mit mindestens 3 Kohlenstoffatomen und mindestens eine Carboxylgruppe am Ende der genannten Molekülstruktur;
D) organische Verbindungen enthaltend mindestens eine für Fette typische (fatty) Alkylgruppe mit mindestens 8 Kohlenstoffatomen, mindestens eine Fluoralkylgruppe mit mindestens 3 Kohlenstoffatomen und mindestens eine Mercaptogruppe am Ende der genannten Molekülstruktur;
mit der Maßgabe, daß der genannte ferromagnetische Aufzeichnungsfilm und der genannte amorphe Kohlenstoffilm jeweils einen spezifischen Widerstand von weniger als $10^{13}\Omega$.cm aufweisen.

2. Ein magnetisches Aufzeichnungsmedium nach Anspruch 1, in welchem der genannte Schutzfilm Wasserstoff enthält.

3. Ein magnetisches Aufzeichnungsmedium nach Anspruch 1, in welchem der genannte amorphe Kohlenstoffilm eine Dicke im Bereich von 3 bis 50 nm(30 bis 500 Å) aufweist.

4. Ein magnetisches Aufzeichnungsmedium nach Anspruch 1, in welchem der genannte Film aus der organischen Verbindung durch Aufbringen der genannten organischen Verbindung in einer Menge von 0,1 bis 500 mg/$m^2$ gebildet wird.

5. Ein magnetisches Aufzeichnungsmedium nach Anspruch 1, in welchem der genannte Aufzeichnungsfilm aus einem ferromagnetischen Metall oder einer Legierung mit einer säulenförmigen Kristallstruktur besteht und bei welchem auf einer Oberfläche der genannten säulenförmigen Kristallteilchen eine Metalloxidschicht vorhanden ist.

6. Ein magnetisches Aufzeichungsmedium nach Anspruch 5, in welchem die genannte säulenförmige Kristallstruktur eine mehrschichtige Struktur der genannten säulenförmigen Kristallteilchen umfaßt.

7. Ein magnetisches Aufzeichnungsmedium nach Anspruch 5 und 6, in welchem die genannte säulenförmige Kristallstruktur säulenförmige Kristallteilchen, welche mit einer Oxidschicht bedeckt sind oder in eine solche eingebettet sind, umfaßt, und ein Schutzfilm zwischen dem genannten Aufzeichnungsfilm und dem genannten diamantartigen Kohlenstoffilm vorgesehen ist.

8. Ein magnetisches Aufzeichnungsmedium nach Anspruch 7, in welchem der genannte Schutzfilm aus einem Material besteht, das mindestens ein Element, ausgewählt aus der Gruppe der Elemente Kohlenstoff, Wasserstoff, Sauerstoff, Fluor und Kombinationen davon, umfaßt.

9. Ein magnetisches Aufzeichnungsmedium nach Anspruch 7, in welchem der genannte Schutzfilm eine Dicke von 5 nm(50) oder darunter aufweist.

FIG.1

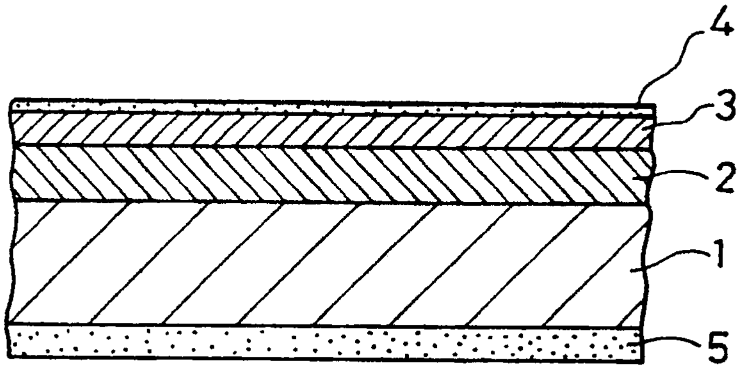


FIG.2

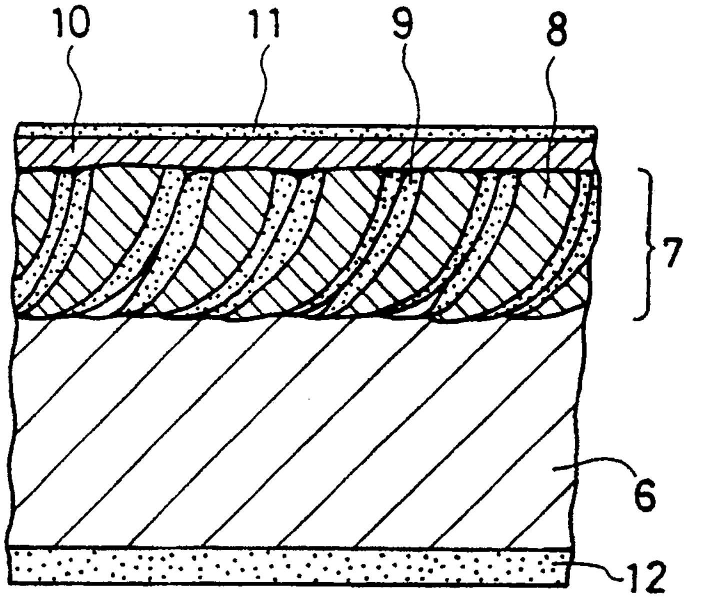

FIG. 3

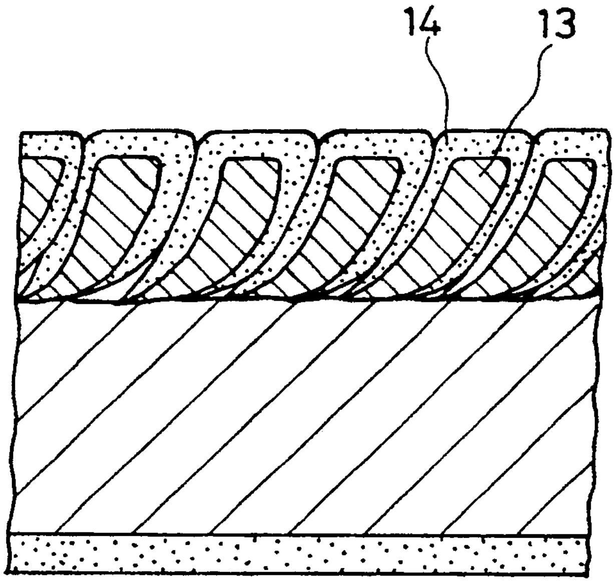


FIG. 4

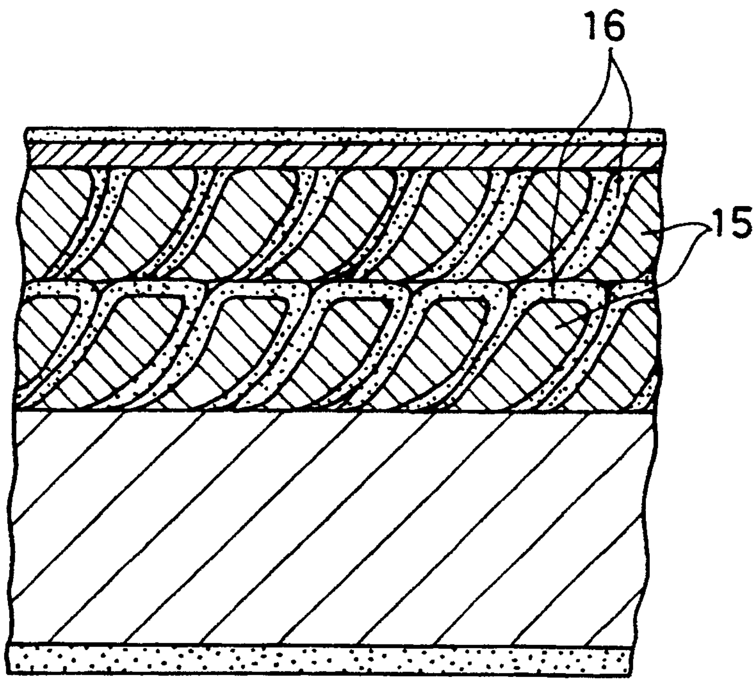

FIG. 5

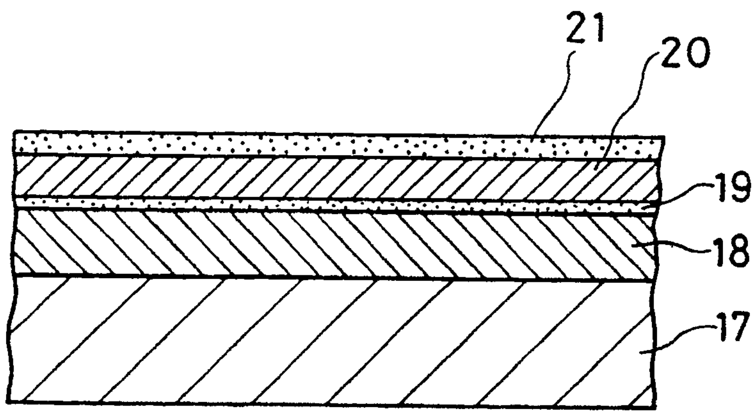

FIG.6(a)

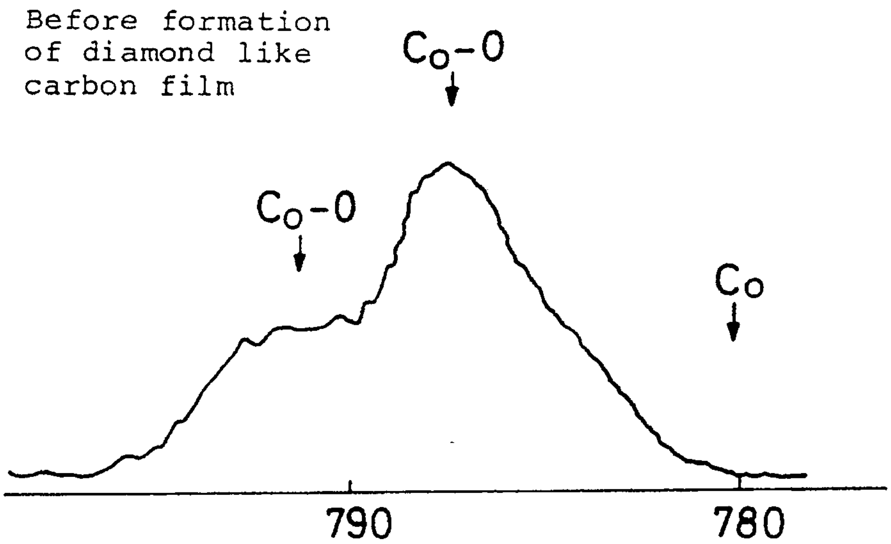
Before formation
of diamond like
carbon film
Co-O
Co-O
Co
790
780

FIG.6(b)

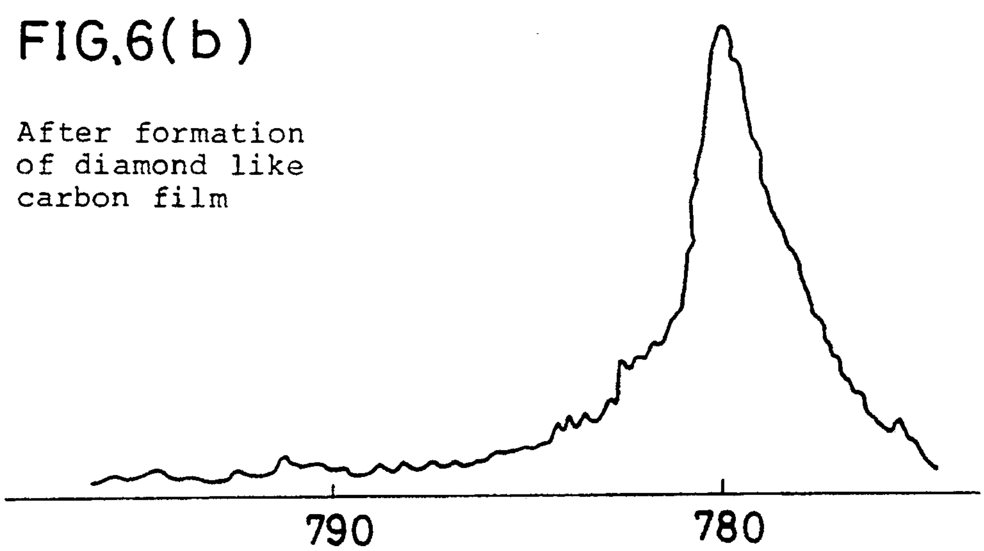
After formation
of diamond like
carbon film
790
780

FIG.7(a)

Before formation of diamond like carbon film

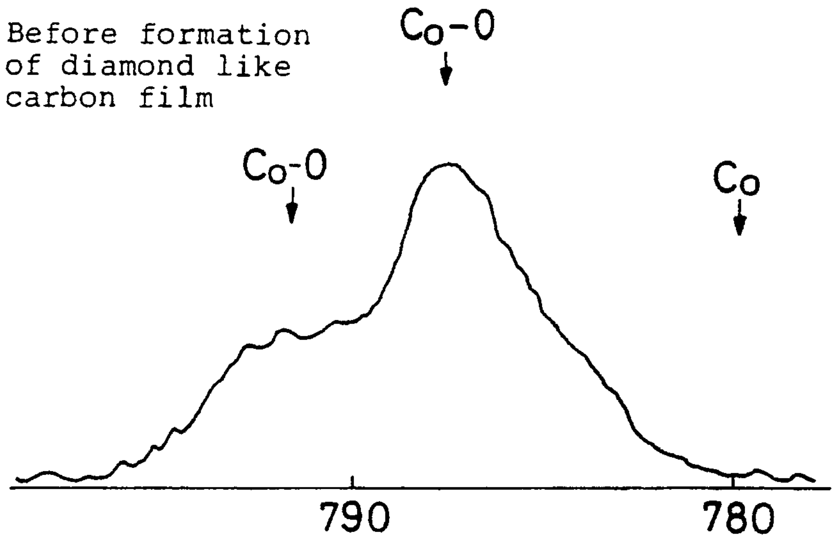


FIG.7(b)

After formation of diamond like carbon film